Europäisches Patentamt

(19) European Patent Office

Office européen des brevets

(11) **EP 0 625 105 B1**

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(21) Anmeldenummer: **94900730.6**

(22) Anmeldetag: **27.11.1993**

(51) Int. Cl.$^6$: **B60T 8/00**

(86) Internationale Anmeldenummer: **PCT/DE93/01130**

(87) Internationale Veröffentlichungsnummer:
**WO 94/13517 (23.06.1994 Gazette 1994/14)**

(54) **BREMSSYSTEM**

BRAKE SYSTEM

SYSTEME DE FREINAGE

(84) Benannte Vertragsstaaten:
**DE GB IT**

(30) Priorität: **11.12.1992 DE 4241844**

(43) Veröffentlichungstag der Anmeldung:
**23.11.1994 Patentblatt 1994/47**

(73) Patentinhaber: **ROBERT BOSCH GMBH**
**70442 Stuttgart (DE)**

(72) Erfinder:
- **POGGENBURG, Rüdiger**
  **D-71665 Vaihingen (DE)**
- **SONNTAG, Eberhard**
  **D-70839 Gerlingen (DE)**
- **MEIER, Thomas**
  **D-71691 Freiberg (DE)**
- **STREHLE, Alfred**
  **D-70736 Fellbach (DE)**

(56) Entgegenhaltungen:
EP-A- 0 509 237          WO-A-89/04782
DE-A- 3 903 833          FR-A- 2 143 293
GB-A- 2 157 381          US-A- 4 828 334

**Beschreibung**

Stand der Technik

Es sind Bremssyteme mit den Merkmalen des Oberbegriffs des Anspruchs 1 bekannt, bei denen mittels gepulster Ventile ein Bremsdruck an den Hinterrädern eines Fahrzeugs im Vergleich zum Vorderachsbremsdruck eingesteuert wird, der dem der bekannten idealen Bremsdruckverteilung entspricht (DE 39 01 923 A1).

Die EP,A1,0 509 237 zeigt eine Bremsdruckregelanlage für ein Kraftfahrzeug. Bei diesem Verfahren wird die Differenz zwischen dem schnellsten Vorderrad und dem langsamsten Hinterrad ermittelt und mit einem Vergleichswert verglichen. Ein Überschreiten der Differenz von dem Vergleichswert führt zu einem Druckabbau. Bei engen Kurven wird der Vergleichswert an die Fahrzeuggeschwindigkeit angepaßt.

Vorteile der Erfindung

Bei der Erfindung wird der Bremsdruck der Hinterachse in Abhängigkeit vom Bewegungsverhalten des Fahrzeugs und unabhängig von der installierten Bremskraftverteilung eingesteuert. Dabei wird noch unterschieden, ob in einer Kurve oder bei Geradeausfahrt gebremst wird und es wird bei Geradeausfahrt ein vergrößerter Schlupf zugelassen, was eine stärkere Abbremsung durch die Hinterräder bewirkt.

Anhand der Zeichnung wird ein Ausführungsbeispiel der Erfindung näher erläutert.

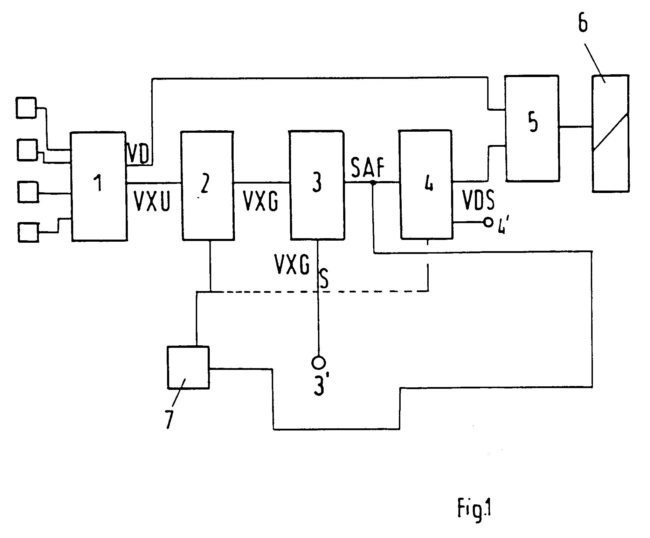

In Figur 1 sind vier Geschwindigkeitssensoren an den Rädern mit 1 bis 4 bezeichnet. Sie werden einem Block 1 zugeführt der aus den Geschwindigkeitssignalen des linken Vorderrads $V_{VL}$, des rechten Vorderrads $V_{VR}$, des linken Hinterrads $V_{HL}$ und des rechten Hinterrads $V_{HR}$ Signale

$$VXU = (V_{VL} - V_{HR}) - (V_{VR} - V_{HL}) \text{ und}$$

$$V_D = V_{Vmax} - V_{Hmin}$$

erzeugt, wobei $V_{Vmax}$ das Signal des schnellsten Vorderrades und $V_{Hmin}$ das Signal des langsamsten Hinterrads ist. Das Signal VXU wird in einem Filter 2 gefiltert, wobei die Zeitkonstante des Filters durch die Fahrzeugverzögerung steuerbar ist, und zwar derart, daß die Zeitkonstante abnimmt, wenn die Fahrzeugverzögerung zunimmt. Es ist hier angenommen, daß das Fahrzeug mit einem ABS ausgerüstet ist und daß die Fahrzeugverzögerung in einem ABS, z.B. aus dem Gradienten der Referenzgeschwindigkeit gewonnen wird. Das gefilterte Signal VXG wird einem Vergleicher 3 zugeführt, der dieses Signal mit einem fahrzeugspezifischen, über eine Klemme 3' zugeführten Schwellwert $VXG_S$ von z.B. 2 km/h vergleicht. Der Vergleicher 3 gibt ein Signal SAF ab, wenn dieser Schwellwert nicht überschritten wird. Das abgegebene Signal zeigt an, daß Geradeausfahrt vorliegt. Das Signal kann auch dem ABS 7 zugeführt werden, um im ABS-Regelalgorithmus berücksichtigt zu werden.

Das Verzögerungssignal des ABS 7 wird auch einem Multiplizierer 4 zugeführt, der einmal das Verzögerungssignal mit einer fahrzeugspezifischen Wert (über Klemme 4' eingegeben) multipliziert und außerdem eine Gewichtung des Produkts in Abhängigkeit davon vornimmt, ob das Geradeausfahrtsignal vorliegt (Gewichtung $a_1$) oder nicht (Gewichtung $a_2$), wobei der Gewichtungsfaktor $a_1 > a_2$ ist (z.B. $a_1 = 1$ und $a_2 = 2$). Das so gewonnene Ausgangssignal des Multiplizierers 4 stellt den Vergleichswert $VD_S$ für das Signal VD dar. Übersteigt das Signal VD den Signalwert $VD_S$ so erzeugt ein Vergleicher 5 ein Signal, mit dem ein Ventil 6 angesteuert wird, das dann keinen weiteren Bremsdruckanstieg an der Hinterachse mehr zuläßt. Anstelle des Ventils 6 können bei Einzelradregelung an der Hinterachse die Einlaßventile der beiden Hinterradbremsen treten. Das Ventil 6 (oder die Ventile) werden bei Geradeausfahrt erst bei einem höheren Schlupf als bei Kurvenfahrt angesteuert.

**Patentansprüche**

1.  Verfahren zur Betätigung eines Bremssystems für ein Kraftfahrzeug, bei dem beim Bremsen an den Bremsen der Hinterräder ein gegenüber den Bremsen der Vorderräder unterschiedlicher Bremsdruck eingesteuert wird und die Differenz ($V_D$) des schnellsten Vorderrades und des langsamsten Hinterrads mit einem von der Fahrzeugverzögerung abhängigen Vergleichswert (VDS) verglichen wird und in Abhängigkeit von diesem Vergleich eine Druckänderung an den Hinterradbremsen veranlaßt werden kann, dadurch gekennzeichnet, daß eine Druckerhöhung an den Hinterradbremsen verhindert wird, wenn der Vergleichswert (VDS) überschritten wird und daß eine Gewichtung des Vergleichswertes (VDS) abhängig davon vorgenommen wird, ob eine Geradeausfahrt vorliegt oder nicht.

2.  Verfahren nach Anspruch 1, dadurch gekennzeichnet, daß der Vergleichswert (VDS) bei Geradeausfahrt größer ist als bei Kurvenfahrt.

**3.** Verfahren nach Anspruch 1, dadurch gekennzeichnet, daß auf Geradeausfahrt erkannt wird, wenn die folgende Radgeschwindigkeitsdifferenz

$$VXU = (V_{V1} - V_{H2}) - (V_{V2} - V_{H1})$$

einen Schwellwert nicht überschreitet, wobei mit $V_V$ die Geschwindigkeit der Vorderräder und mit $V_H$ die der Hinterräder bezeichnet sind und die Ziffern 1 und 2 Fahrzeugseiten kennzeichnen.

**4.** Verfahren nach Anspruch 1 oder 2, dadurch gekennzeichnet, daß die Differenz VXU gefiltert wird, wobei die Zeitkonstante des Filters von der Fahrzeugverzögerung abhängt.

**5.** Vorrichtung zur Durchführung des Verfahrens nach Anspruch 1 mit ersten Mitteln (6), mittels der beim Bremsen an den Bremsen der Hinterräder ein gegenüber den Bremsen der Vorderräder unterschiedlicher Bremsdruck eingesteuert wird, und zweiten Mitteln (4), mittels der die Differenz ($V_D$) des schnellsten Vorderrades und des langsamsten Hinterrads mit einem von der Fahrzeugverzögerung abhängigen Vergleichswert (VDS) verglichen wird und in Abhängigkeit von diesem Vergleich eine Druckänderung an den Hinterradbremsen veranlaßt werden kann, dadurch gekennzeichnet, daß die zweiten Mittel (4) derart ausgelegt sind, daß eine Druckerhöhung an den Hinterradbremsen verhindert wird, wenn der Vergleichswert (VDS) überschritten wird und daß eine Gewichtung des Vergleichswertes (VDS) abhängig davon vorgenommen wird, ob eine Geradeausfahrt vorliegt oder nicht.

**6.** Vorrichtung nach Anspruch 5, dadurch gekennzeichnet, daß die zweiten Mittel (4) derart ausgelegt sind, daß der Vergleichswert (VDS) bei Geradeausfahrt größer ist als bei Kurvenfahrt.

## Claims

**1.** Method for operating a brake system for a motor vehicle, in which, during braking, a different brake pressure is fed in at the brakes of the rear wheels to that fed in at the brakes of the front wheels and the difference ($V_D$) between the fastest front wheel and the slowest rear wheel is compared with a comparison value (VDS) dependent on the vehicle deceleration, and a change in pressure can be brought about at the rear wheel brakes as a function of this comparison, characterized in that an increase in pressure at the rear wheel brakes is prevented if the comparison value (VDS) is exceeded and in that weighting of the comparison value (VDS) is performed depending on whether straight-ahead travel is present or not.

**2.** Method according to Claim 1, characterized in that the comparison value (VDS) is higher in the case of straight-ahead travel than in the case of cornering.

**3.** Method according to Claim 1, characterized in that straight-ahead travel is identified if the following wheel speed difference

$$VXU = (V_{V1} - V_{H2}) - (V_{V2} - V_{H1})$$

does not exceed a threshold value, $V_V$ denoting the speed of the front wheels and $V_H$ denoting that of the rear wheels, and the numbers 1 and 2 designating vehicle sides.

**4.** Method according to Claim 1 or 2, characterized in that the difference VXU is filtered, the time constant of the filter depending on the vehicle deceleration.

**5.** Apparatus for carrying out the method according to Claim 1 with first means (6), by means of which, during braking, a different brake pressure is fed in at the brakes of the rear wheels to that fed in at the brakes of the front wheels, and second means (4), by means of which the difference ($V_D$) between the fastest front wheel and the slowest rear wheel is compared with a comparison values (VDS) dependent on the vehicle deceleration, and a change in pressure can be brought about at the rear wheel brakes as a function of this comparison, characterized in that the second means (4) are designed in such a way that an increase in pressure at the rear wheel brakes is prevented if the comparison value (VDS) is exceeded and in that weighting of the comparison value (VDS) is performed depending on whether straight-ahead travel is present or not.

**6.** Apparatus according to Claim 5, characterized in that the second means (4) are designed in such a way that the comparison value (VDS) is higher in the case of straight-ahead travel than in the case of cornering.

**Revendications**

1.  Procédé pour actionner un système de frein d'un véhicule automobile, selon lequel, pendant le freinage, on commande une pression de frein différente pour le freinage des roues arrière par rapport à celle du freinage des roues avant et la différence ($V_D$) de la roue avant la plus rapide et de la roue arrière la plus lente est comparée à une valeur de comparaison (VDS) dépendant de la décélération du véhicule et en fonction de cette comparaison, on provoque une variation de pression des freins des roues arrière, caractérisé en ce qu'on évite une augmentation de la pression des freins des roues arrière si la valeur de comparaison (VDS) est dépassée et on effectue une pondération de la valeur de comparaison (VDS) suivant que le véhicule circule en ligne droite ou non.

2.  Procédé selon la revendication 1, caractérisé en ce que la valeur de comparaison (VDS) pour le déplacement en ligne droite est supérieur à celle d'un déplacement en courbe.

3.  Procédé selon la revendication 1, caractérisé en ce qu'on estime que le déplacement se fait en ligne droite si la différence suivante de vitesse des roues

    $$VXU = (V_{V1} - V_{H2}) - (V_{V2} - V_{H1})$$

    ne dépasse pas un seuil, et dans cette formule $V_V$ représente la vitesse des roues avant, $V_H$ celle des roues arrière et les chiffres 1 et 2 désignent les côtés du véhicule.

4.  Procédé selon la revendication 1 ou 2, caractérisé en ce qu'on filtre la différence VXU, la constante de temps du filtre dépendant de la décélération du véhicule.

5.  Dispositif pour la mise en oeuvre du procédé selon la revendication 1, comprenant des premiers moyens 6 à l'aide desquels au freinage on induit dans les freins des roues arrière une pression de frein différente de celle du freinage des roues avant, et des seconds moyens (4) à l'aide desquels on compare la différence ($V_D$) de la roue avant la plus rapide et de la roue arrière la plus lente à une valeur de comparaison (VDS) dépendant de la décélération du véhicule, et en fonction de cette comparaison on commande une variation de pression des freins des roues arrière, caractérisé en ce que les seconds moyens (4) sont conçus pour éviter une augmentation de la pression des freins de roues arrière si la valeur de comparaison (VDS) est dépassée et on effectue une pondération de la valeur de comparaison (VDS) en fonction de ce que le déplacement se fait en ligne droite ou non.

6.  Dispositif selon la revendication 5, caractérisé en ce que les seconds moyens (4) sont conçus pour que la valeur de comparaison (VDS) pour le déplacement en ligne droite soit supérieure à la valeur prise pour le déplacement en courbe.

Fig.1